# EUROPEAN PATENT SPECIFICATION

(11) **EP 2 500 244 B1**
(45) Date of publication and mention of the grant of the patent: **29.10.2014**
(21) Application number: 11158410.8
(22) Date of filing: 16.03.2011
(51) Int. Cl.: B62D 35/00

(54) **Support system of a lateral aerodynamic panel of an aerodynamic kit of a cabin of an industrial vehicle**
Tragsystem eines seitlichen, aerodynamischen Paneel eines aerodynamischen Bausatz eines Nutzfahrzeugs
Système de support d'un panneau latéral aérodynamique d'un kit aérodynamique d'une cabine d'un véhicule industriel

(43) Date of publication of application: 19.09.2012
(73) Proprietor: IVECO S.p.A., 10156 Torino (IT)
(72) Inventor: Bivona, Francesco, 10143, TORINO (IT)
(74) Representative: Gervasi, Gemma

(56) References cited:
- DE-A1-102008 036 888
- GB-A- 2 146 597
- US-A1- 2010 201 153
- US-A1- 2011 042 998
- US-B1- 6 932 419

## Description

### Application field of the invention

The present invention refers to a support system of a lateral aerodynamic panel of an aerodynamic kit of a cabin of an industrial vehicle.

### Description of the prior art

Industrial vehicles, above all those having a tractor and a semitrailer, usually comprise an aerodynamic kit associated to the cabin, whose aim is to reduce vehicle's wind resistance. Since the cabin defines a lower front surface with respect to the semitrailer, a spoiler is placed on the roof of the cabin in order to suitably connect the front surfaces of the two vehicle's portions and a pair of aerodynamic panels are laterally arranged between the cabin and the semitrailer, in order to obtain a continuous aerodynamic surface between the cabin and the semitrailer.

Such lateral panels are fixed to the cabin.

Usually, in order to simplify the assembling, one panel is fixed, while the other may at least partially oscillate, so that the driver can easily reach the devices placed behind the cabin when the semitrailer is attached to the tractor. According to a solution of the prior art, the aerodynamic panel opens towards the outside of the vehicle, while according to another solution the panel can be closed inside the vehicle, by folding over the rear surface of the cabin.

Since the rear profile of the lateral wall of the vehicle cabin is not straight, the aerodynamic panel has to follow the profile of such surface, thus complicating the arrangement of the hinges that allow an easy opening or closing rotation of the panel. According to the prior art, such problem may be solved by arranging a portion of the panel that is fixed and integral with the cabin and follows the rear profile of the cabin, with another portion of the panel that can oscillate, so that they define a straight connection line between the fixed and the oscillating portion.

US 6932419 discloses the preamble of claim 1.

Having a fixed portion of the panel implies that the width of the driver's access to the rear part of the cabin is reduced, when the semitrailer is attached to the tractor.

### Summary of the invention

Therefore the aim of the present invention is to overcome all the drawbacks set forth above and to provide a support system of a lateral aerodynamic panel of an aerodynamic kit of a cabin of an industrial vehicle suitable to adapt to any rear profile of the cabin, so that it can be monolithic and it can fully clear the lateral access to the rear part of the cabin when the semitrailer is attached to the tractor.

The object of the present invention is a support system of a lateral aerodynamic panel of an aerodynamic kit of a cabin of an industrial vehicle suitable to adapt to any rear profile of the cabin, according to claim 1.

The object of the present invention is in particular a lateral aerodynamic panel of an aerodynamic kit of a cabin of an industrial vehicle, comprising said support system suitable to adapt to any rear profile of the cabin, as described more fully in the claims which are an integral part of the present description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figures from 1 to 4 show an opening sequence of a lateral aerodynamic panel by means of respective support means according to a top view of a left panel, according to a front view of the vehicle,
figure 5 shows an internal view of the panel of the previous figures,
figures 6 and 7 show a detail of the support means of the previous figures, of a right aerodynamic panel.

In the figures the same reference numbers and letters identify the same elements or components.

### Detailed description of preferred embodiments of the invention

With reference to the figures, the present invention comprises an aerodynamic panel 1, having a vertical development, fixed to a cabin C of a vehicle by means of a support device comprising at least two parallelogram hinges 2 and 2', also called two-axis hinges.

Each hinge comprises a fixing bracket 21 to the cabin C of the vehicle and a fixing bracket 22 to the aerodynamic panel 1.

Preferably the two brackets 21 and 22 have a U-shaped cross section.

Each bracket comprises two seats for the respective fixing pins of the ends of two connecting rods 23 and 24.

In particular, each connecting rod 23 and 24 has a first end rotatably associated to the fixing bracket 21 and a second end rotatably associated to the fixing bracket 22. The connecting rod 24 is internal to the hinge's range of movement, since it is always comprised between the aerodynamic panel 1 and the connecting rod 23, which is thus external to the range.

The connecting rods' axis of rotation are reciprocally parallel.

The connecting rods are fixed in such a way that they cannot cross.

Preferably, the two connecting rods lie on the same opening plane as the hinge.

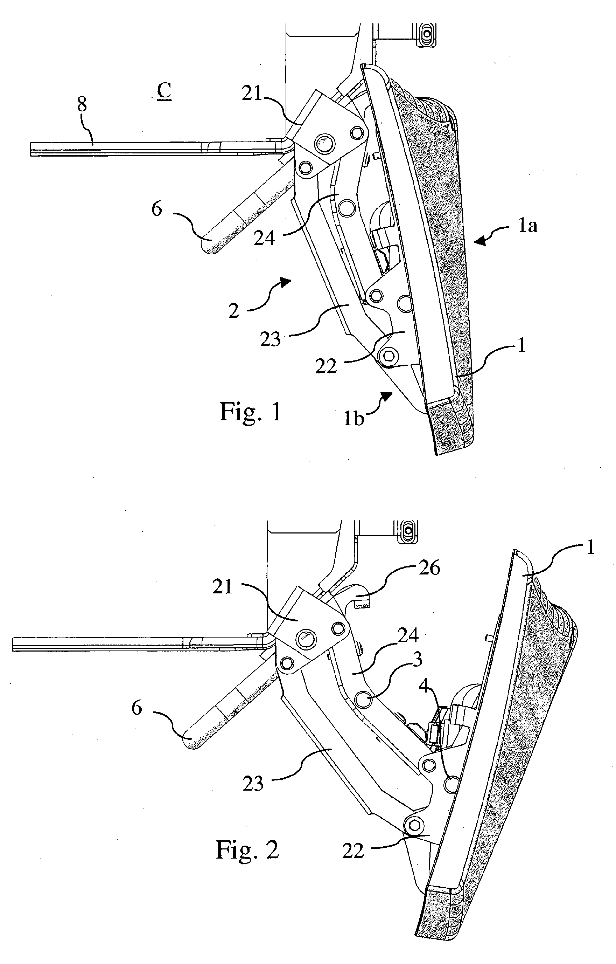

Figure 1 shows the aerodynamic panel arranged in running conditions, namely aligned to the profile of the lateral wall of the vehicle cabin.

As showed in the figures from 1 to 4, the aerodynamic panel 1, thanks to the two-axis hinges, moves away from such alignment with the lateral wall of the cabin C and ends its opening by overlapping on the lateral wall C1 of the cabin. The movement of the system and therefore the reciprocal positioning of the hinges is such that the opening/closing movement of the aerodynamic panel is substantially parallel to itself.

It is evident that the hinge 2 is above the hinge 2', preferably plumb with respect to the latter.

Such solution allows to solve the problem of making the removal of the aerodynamic panels reversible, the panels being suitable to follow any rear profile of the lateral wall of the cabin.

According to such solution, two advantages are obtained: the face 1a of the panel always faces the outside, thus it is not necessary to take care of the appearance of the internal face 1b, moreover it is possible to completely remove the panel, thus completely clearing the lateral access to the devices of the rear part of the cabin when the semitrailer is attached to the tractor.

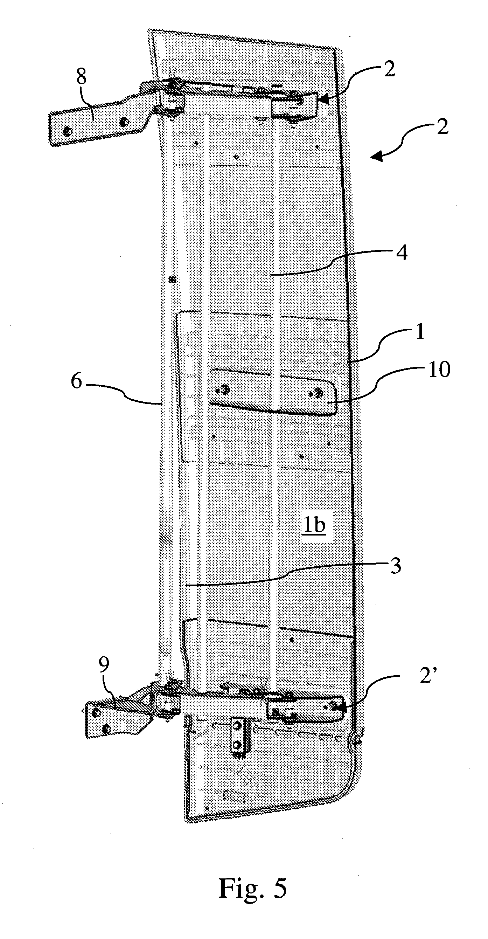

The fixing bracket 21 of the upper hinge 2, as well as the fixing bracket 21 of the lower hinge 2', with reference to figure 5, may comprise an extension 8 and 9 respectively in order to adapt to the shape of the rear surface of the cabin.

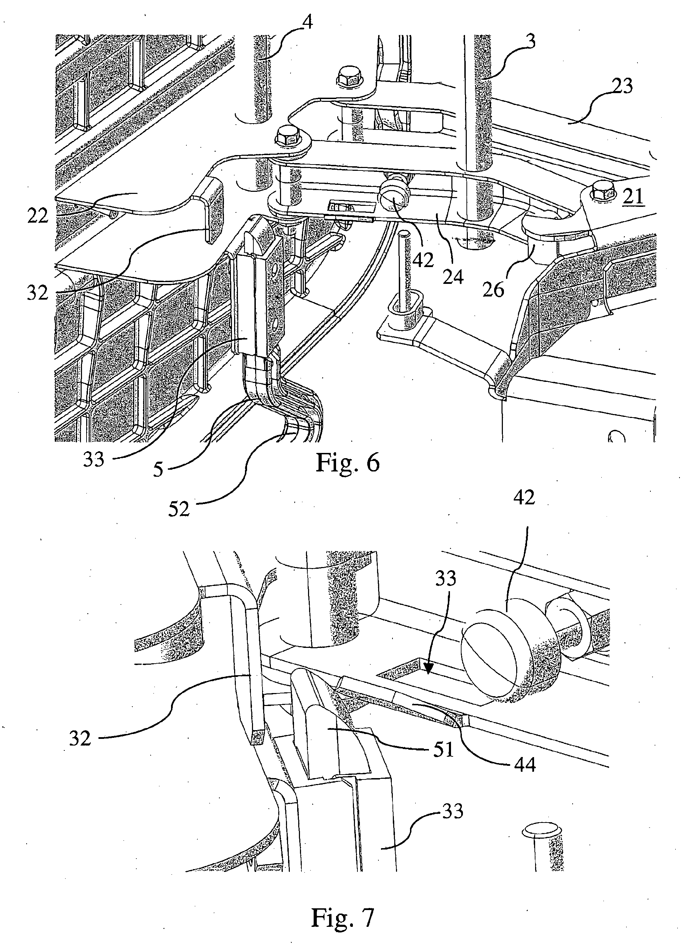

With particular reference to the figures 5 and 6, the two hinges 2 and 2' are interconnected between each other by means of stiffening rods 3 and 4. In particular, a first stiffening rod 3 is connected by a first end to the connecting rod 24 comprised in the upper hinge 2 and by a second end to the connecting rod 24 comprised in the lower hinge 2', so that it is perpendicular to the opening planes of the hinges, which are reciprocally parallel.

A second stiffening rod 4 is connected by a first end to the bracket 22 of the upper hinge 2 and by a second end to the bracket 22 of the lower hinge 2', so that it is substantially parallel to the vertical development of the aerodynamic panel 1.

Such solution connects the two hinges between each other, making their opening and closing movement synchronous. This results in an extreme reduction of the torsion stresses on the aerodynamic panel 1, generated both by the driver, when opening the panel, and by the wind when the vehicle is travelling.

The panel may be made of any material, for example plastic, fiberglass, carbon fiber, etc. The stiffening rod 4 allows to anchor the panel to the support device not only in correspondence of the hinges, but also in an intermediate area between the hinges, since it is possible to exploit the second stiffening rod 4 that is parallel to the aerodynamic panel 1. According to a preferred alternative embodiment of the invention, at least a further interconnection between the aerodynamic panel 1 and the support system is possible. The support system, in an alternative preferred embodiment, thus comprises at least two hinges and the interconnection rods 3 and 4 and at least a further interconnection element 10 that is intermediate between the two hinges 2 and 2' fixed to said stiffening rod 4.

According to a first embodiment of the invention, at least one of the two hinges comprises limit stops both for opening and for closing. Both are preferably adjustable.

In particular, with reference to figures 6 and 7, a first limit stop includes a pad 42, for example an elastomeric pad, fixed to the internal connected rod 24 by a screw, a nut and a lock nut, so that it projects with respect to the connecting rod and it abuts against the bracket 22, when the panel is in a position fully closed.

Preferably, the bracket 22 is provided with a tongue 32 suitable to abut against the pad 42.

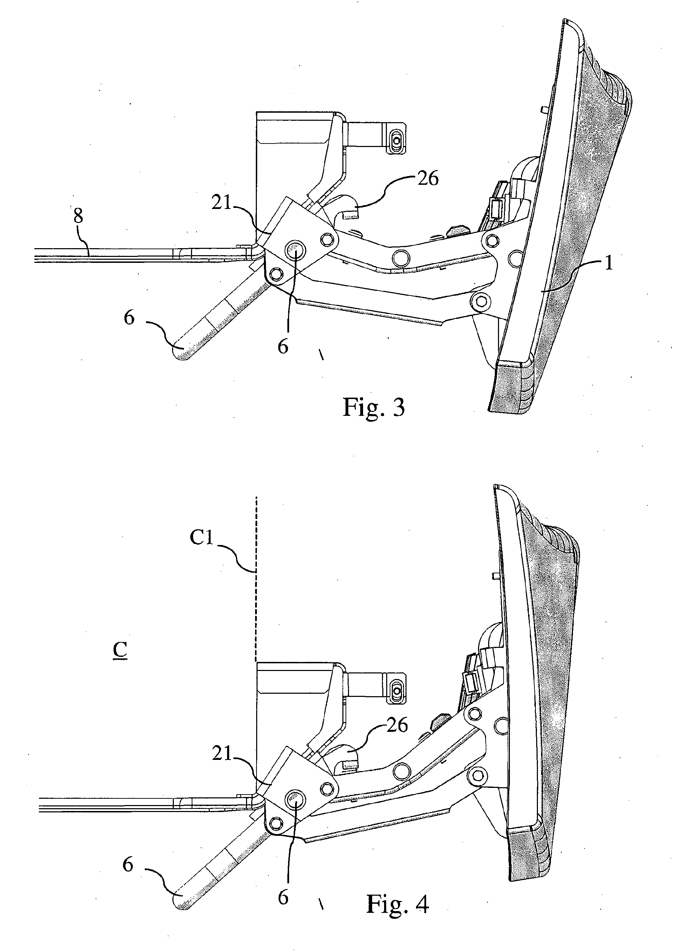

Another pad 26 is integral with the bracket 22, showed in figures 1 - 4 and 6, and is intended to abut against the connecting rod 24 when the panel is in a fully open position. Thus the pad may positioned either on a fixing bracket or on a connecting rod without distinction. It is evident that inverting the reciprocal position tongue/pad is completely equivalent, even though the configuration showed is preferable in terms of bulk.

At least one of the two hinges comprises a closing lock of the aerodynamic panel, which prevents its opening when the vehicle is travelling.

The lower hinge 2', with particular reference to figures 6 and 7 comprises a latch 5, enbloc with a handle 52, slidingly fixed to the fixing bracket 22 of the aerodynamic panel 1. The latch 5 is placed and may slide perpendicularly to the opening plane of the hinge.

The internal connecting rod 24 has a slot 33 in correspondence of the coupling end 51 of the latch 5. When the panel is fully closed, the coupling end 51 of the latch 5 engages the slot 33 of the internal connecting rod 24, thus preventing the opening of the hinge.

A return spring, not showed in the figures, forces the latch to engage said slot.

Preferably, the handle 52 of the latch is dimensioned so that the driver can grab it by slipping a hand under the lower edge of the aerodynamic panel 1, so that he/she can pull it down in order to unlock the corresponding lower hinge 2'.

In order to simplify the locking of the aerodynamic panel 1, the side of the coupling end 51 of the latch 5 that faces the slot 33 is rounded, when it is not engaged with it, and its opposite side is flat, while the internal connecting rod 24 comprises a guiding tongue 44 which cooperates with the rounding of the end 51 in order to induce the lowering of the latch during the locking of the aerodynamic panel 1. Then, when the end 51 reaches the slot 33, the return spring makes the latch raise and engage the slot 33.

According to another aspect of the invention, each connecting rod is realized by means of a pair of flat plates, parallel and distanced at the ends interconnecting with the brackets 21 and 22. Advantageously, the connecting rods are lighter, their strength being equal.

Moreover, in order to facilitate the overlapping movement of the aerodynamic panel onto the lateral wall C1 of the cabin C, the shape of the connecting rods is incurvated, the respective concavity being turned towards the aerodynamic panel 1, when it is in closed position. According to another aspect of the invention, a handle 6 is fixed between the fixing brackets 21 of the two hinges, the lower hinge 2' and the upper hinge 2.

The driver can get hold of such handle 6 when he/she has to get on the vehicle to reach the devices placed in the back of the cabin.

Advantageously, being the handle fixed to the brackets 21 of the hinges, it is not necessary to make further holes in the structure of the cabin or to provide for further connection means to add a specially provided handle.

It will be apparent to the person skilled in the art that other alternative and equivalent embodiments of the invention can be conceived and reduced to practice without departing from the scope of the invention.

The advantages deriving from the use of this invention are evident.

The present invention allows to reversibly and completely remove the lateral aerodynamic panels, even when the rear profile of the lateral wall of the vehicle cabin is not straight.

Another advantage lies in that it has a rigid support structure, so that the aerodynamic panel is not subject to torsion stresses.

A further advantage is that any adaptation to the cabin's shape can be carried out by means of the extensions 8 and 9 of the fixing brackets 21.

Another advantage lies in that a holding handle is fixed to the support system and not directly to the cabin, limiting the number of holes and of assembling operations.

From the description set forth above it will be possible for the person skilled in the art to embody the invention with no need of describing further construction details.

The elements and the characteristics described above may be combined to realize any full or partial embodiment of the invention.

## Claims

1. Support system of a lateral aerodynamic panel (1) of an aerodynamic kit of a cabin (C) of an industrial vehicle, the aerodynamic panel having a vertical development, the system comprising at least two hinges suitable to connect, in a same number of distinct points, the aerodynamic panel (1) and a rear part of a cabin (C), said at least two hinges (2 and 2') being of the type having two axes of rotation and are reciprocally placed so that the aerodynamic panel (1) moves between an open and a closed position in a way substantially parallel to itself; each hinge (2, 2') comprising a first bracket (21) suitable to be fixed to the cabin (C) of a vehicle, a second bracket (22) suitable to be fixed to the aerodynamic panel (1) and a first (23) and a second connecting rod (24), each one of them comprising a first end rotatably associated to said first bracket (21) and a second end rotatably associated to said second bracket (22), so that the axis of rotation of the connecting rods are parallel between each other, **characterized in that** the system further comprises a first stiffening rod (4) substantially vertically placed and connecting said second brackets (22) to each other; whereby it also comprises a second stiffening rod (3) substantially vertically placed and connecting between each other said second connecting rods (24) of said at least two hinges (2, 2').

2. System according to claim 1, wherein said at least two hinges (2, 2') are reciprocally placed so that, when the device is associated to a cabin (C), the aerodynamic panel (1) in a closed position is aligned with a lateral wall (C1) of said cabin (C) and in an open position is overlapping said lateral wall (C1).

3. Support system according to one of the previous claims, further comprising a holding handle (6) having two opposite ends, one end of which being connected to the first bracket (21) of one of said at least two hinges (2) and the other end being fixed to the first bracket (21) of another (2') of said at least two hinges.

4. Support system according to one of the previous claims, further comprising a fixing element (10) of the aerodynamic panel (1) to the support system, intermediate to said at least two hinges (2,2) and connected to said first stiffening rod (4).

5. Support system according to any of the previous claims, wherein at least one of said at least two hinges further comprises limit stops ((42,32),(26,24)).

6. Support system according to one of the previous claims, wherein at least one of said at least two hinges comprises a locking device (5, 33) suitable to prevent a reciprocal rotation between said second bracket (22) and said second connecting rod (24), the locking device comprising a handle (52) shaped in order to be accessible from below a lower edge of the aerodynamic panel (1).

7. Industrial vehicle comprising a cabin (C) and **characterized in that** it comprises a support system of a lateral aerodynamic panel (1) of an aerodynamic kit of the cabin (C) according to any of the previous claims.

## Patentansprüche

1. Trage-System eines seitlichen aerodynamischen Paneels (1) eines aerodynamischen Bausatzes einer Kabine (C) eines Gewerbe-Fahrzeugs, wobei das aerodynamische Paneel eine vertikale Ausbildung aufweist, wobei das System umfasst: wenigstens zwei Gelenke, die geeignet sind, das aerodynamische Paneel (1) und einen hinteren Teil einer Kabine (C) in derselben Zahl individueller Punkte zu verbinden, wobei die wenigstens zwei Gelenke (2 und 2') des Typs sind, der zwei Schwenk-Achsen aufweist, und umgekehrt angeordnet sind, so dass sich das aerodynamische Paneel (1) zwischen einer offenen und einer geschlossenen Position in einer Weise bewegt, die im Wesentlichen parallel zu sich selbst ist; wobei jedes Gelenk (2, 2') umfasst: eine erste Klammer (21), die geeignet dafür ist, an der Kabine (C) eines Fahrzeugs befestigt zu werden, eine zweite Klammer (22), die geeignet ist, an dem aerodynamischen Paneel (1) befestigt zu werden, und einen ersten (23) und einen zweiten Verbindungs-Stab (24), wobei jeder von den beiden ein erstes Ende, das schwenkbar mit der ersten Klammer (21) assoziiert ist, und ein zweites Ende umfasst, das schwenkbar mit der zweiten Klammer (22) assoziiert ist, so dass die Schwenkachsen der Verbindungs-Stäbe parallel zueinander sind, **dadurch gekennzeichnet, dass** das System weiter umfasst: einen ersten Versteifungs-Stab (4), der im Wesentlichen vertikal angeordnet ist und die zweiten Klammern (22) miteinander verbindet, wobei es auch einen zweiten Versteifungs-Stab (3) umfasst, der im Wesentlichen vertikal angeordnet ist und miteinander die zweiten Verbindungs-Stäbe (24) der wenigstens zwei Gelenke (2, 2`) verbindet.

2. System nach Anspruch 1, worin die wenigstens zwei Gelenke (2, 2') umgekehrt angeordnet sind, so dass dann, wenn die Vorrichtung mit einer Kabine (C) verbunden ist, das aerodynamische Paneel (1) in einer geschlossenen Position fluchtend mit einer Seitenwand (C1) der Kabine (C) ist und in einer offenen Position die Seitenwand (C1) überragt.

3. Trage-System nach einem der vorangehenden Ansprüche, weiter umfassend einen Haltegriff (6), der zwei gegenüberliegende Enden aufweist, von denen ein Ende mit der ersten Klammer (21) eines der wenigstens zwei Gelenke (2) verbunden ist und das andere Ende an der ersten Klammer (21) eines anderen (2`) der wenigstens zwei Gelenke befestigt ist.

4. Trage-System nach einem der vorangehenden Ansprüche, weiter umfassend ein Fixier-Element (10) des aerodynamischen Paneels (1) an dem Trage-System, zwischen den wenigstens zwei Gelenken (2, 2) und verbunden mit dem ersten Versteifungs-Stab (4).

5. Trage-System nach irgendeinem der vorangehenden Ansprüche, worin wenigstens eines der wenigstens zwei Gelenke weiter Begrenzungs-Anschläge ((42, 32), (26, 24)) umfasst.

6. Trage-System nach einem der vorangehenden Ansprüche, worin wenigstens eines der wenigstens zwei Gelenke eine Feststell-Vorrichtung (5, 33) umfasst, die geeignet ist, ein umgekehrtes Schwenken zwischen der zweiten Klammer (22) und dem zweiten Verbindungs-Stab (24) zu verhindern, wobei die Feststell-Vorrichtung einen Handgriff (52) umfasst, der so geformt ist, dass er von einer Stelle unterhalb einer unteren Kante des aerodynamischen Paneels (1) erreichbar ist.

7. Gewerbe-Fahrzeug, umfassend eine Kabine (C) und **dadurch gekennzeichnet, dass** es ein Tragesystem für ein seitliches aerodynamisches Paneel (1) eines aerodynamischen Bausatzes der Kabine (C) gemäß irgendeinem der vorangehenden Ansprüche umfasst.

## Revendications

1. Système de support d'un panneau aérodynamique latéral (1) d'un kit aérodynamique d'une cabine (C) d'un véhicule industriel, le panneau aérodynamique ayant un développement vertical, le système comprenant au moins deux articulations aptes à connecter, à un même nombre de points distincts, le panneau aérodynamique (1) et une partie arrière d'une cabine (C), lesdites au moins deux articulations (2 et 2') étant du type ayant deux axes de rotation et sont placées réciproquement de telle sorte que le panneau aérodynamique (1) se déplace entre une position ouverte et une position fermée d'une manière sensiblement parallèle à lui-même ; chaque articulation (2, 2') comprenant un premier support (21) apte à être fixé à la cabine (C) d'un véhicule, un deuxième support (22) apte à être fixé au panneau aérodynamique (1) et une première (23) et une deuxième tige de connexion (24), chacune d'elles comprenant une première extrémité associée d'une manière tournante audit premier support (21) et une seconde extrémité associée d'une manière tournante audit deuxième support (22) de sorte que les axes de rotation des tiges de connexion sont parallèles entre eux, **caractérisé en ce que** le système comprend en outre une première tige de raidissement (4) placée d'une manière sensiblement verticale et connectant lesdits deuxièmes supports (22) l'un à l'autre ; moyennant quoi il comprend également une deuxième tige de raidissement (3) placée d'une manière sensiblement verticale et connectant entre elles lesdites deuxièmes tiges de connexion (24) desdites au moins deux articulations (2, 2').

2. Système selon la revendication 1, dans lequel lesdites au moins deux articulations (2, 2') sont placées réciproquement de telle sorte que, lorsque le dispositif est associé à une cabine (C), le panneau aérodynamique (1) dans une position fermée est aligné avec une paroi latérale (C1) de ladite cabine (C), et dans une position ouverte, il chevauche ladite paroi latérale (C1).

3. Système de support selon l'une quelconque des revendications précédentes, comprenant en outre une poignée de préhension (6) ayant deux extrémités opposées, dont une extrémité est reliée au premier support (21) d'une desdites au moins deux articulations (2), et l'autre extrémité étant fixée au premier support (21) d'une autre (2') desdites au moins deux articulations.

4. Système de support selon l'une quelconque des revendications précédentes, comprenant en outre un élément de fixation (10) du panneau aérodynamique (1) au système de support, entre lesdites au moins deux articulations (2, 2') et connecté à ladite première tige de raidissement (4).

5. Système de support selon l'une quelconque des revendications précédentes, dans lequel au moins une desdites au moins deux articulations comprend en outre des butées d'arrêt de limite ((42, 32), (26, 24)).

6. Système de support selon l'une quelconque des revendications précédentes, dans lequel au moins une desdites au moins deux articulations comprend un dispositif de verrouillage (5, 33) apte à prévenir une rotation réciproque entre ledit deuxième support (22) et ladite deuxième tige de connexion (24), le dispositif de verrouillage comprenant une poignée (52) configurée pour être accessible depuis en dessous d'un bord inférieur du panneau aérodynamique (1).

7. Véhicule industriel comprenant une cabine (C) et **caractérisé en ce qu'**il comprend un système de support d'un panneau aérodynamique latéral (1) d'un kit aérodynamique de la cabine (C) selon l'une quelconque des revendications précédentes.
